# EUROPÄISCHE PATENTSCHRIFT

(11) **EP 2 604 151 B1**
(45) Veröffentlichungstag und Bekanntmachung des Hinweises auf die Patenterteilung: **21.10.2015**
(21) Anmeldenummer: 12006175.9
(22) Anmeldetag: 31.08.2012
(51) Int. Cl.: A47J 31/06

(54) **Wiederbefüllbare Kapsel für eine Zubereitungsmaschine**
Refillable capsule for a preparation machine
Capsule pouvant être remplie de nouveau pour une machine de préparation

(30) Priorität: 05.09.2011 CH 14552011
(43) Veröffentlichungstag der Anmeldung: 19.06.2013
(73) Patentinhaber: Meier, Erwin, 8052 Zürich (CH)
(72) Erfinder: Meier, Erwin, 8052 Zürich (CH)

(56) Entgegenhaltungen:
- FR-A1- 2 905 683

## Beschreibung

Die vorliegende Erfindung betrifft eine wiederbefüllbare Kapsel für eine Zubereitungsmaschine für Getränke bzw. für flüssige Nahrungsmittel.

Zubereitungsmaschinen für Kapseln sowie dazu geeignete Kapseln sind bekannt. Die Kapseln enthalten ein Produkt, in der Regel ein Trockenprodukt (das im Folgenden der Einfachheit halber stets "Trockenprodukt" genannt wird), das mit einer Flüssigkeit zu einem Getränk bzw. einem flüssigen Nahrungsmittel aufbereitet werden kann.

Für die Zubereitung von Getränken bzw. flüssigen Nahrungsmitteln wird die Kapsel in die Zubereitungsmaschine eingesetzt. Im Betrieb der Zubereitungsmaschine wird Flüssigkeit durch die Kapsel hindurch gepresst, fliesst damit durch das Trockenprodukt und verlässt die Kapsel als zubereitetes Getränk bzw. flüssiges Nahrungsmittel.

Häufig, aber nicht ausschliesslich, betrifft dies Kaffeemaschinen, wobei dann die Kapsel gemahlenen Kaffee als Trockenprodukt enthält.

Die Kapsel kann aber auch zerkleinerte Teeblätter oder gemahlenen Tee enthalten. Ebenso kann sie Milchpulver mit oder ohne Zutaten für die Zubereitung von Schoppen enthalten. Weiter kann das Trockenprodukt beispielsweise aus Fruchtpulver oder aus Suppenpulver bestehen, so dass sich auf diese Weise eine Suppe zubereiten lässt. Zahlreiche Getränke und flüssige Nahrungsmittel lassen sich auf diese Weise zubereiten.

In der Regel ist die Flüssigkeit Wasser, kann aber auch Milch sein, beispielsweise dann, wenn das Trockenprodukt Schokoladepulver ist. Wie bei den Trockenprodukten selbst sind auch viele Arten von Flüssigkeiten denkbar, mit denen Getränke oder flüssige Nahrungsmittel zubereitet werden können.

Üblicherweise sind im Handel mit einem Trockenprodukt gefüllte Einwegkapseln erhältlich, die bei der Zubereitung eine Portion eines Getränks oder flüssigen Nahrungsmittels ergeben.

Oft ist die Kapsel in ihrer Geometrie auf eine spezielle Zubereitungsmaschine abgestimmt, so dass Kapseln anderer Geometrie nicht verarbeitet werden können, somit in der Regel mit den verarbeitbaren Kapseln nur eine beschränkte Auswahl an Trockenprodukten zur Verfügung steht.

FR 2 905 683 zeigt nun eine wiederbefüllbare Kapsel für Zubereitungsmaschinen der oben genannten Art. In solch eine Kapsel können beliebige Trockenprodukte abgefüllt und mit einer Zubereitungsmaschine zubereitet werden.

Zubereitungsmaschinen besitzen Injektionsdorne, die den Bodenbereich einer eingesetzten Einwegkapsel durchstechen und dort die Flüssigkeit in die Kapsel injizieren. Gleichzeitig wird der Deckel der eingesetzten Kapsel perforiert, so dass die Flüssigkeit dort wieder austreten kann.

Entsprechend zeigt die FR 2 905 683 eine wiederbefüllbare Kapsel mit einer ringförmigen Aussparung im Bodenbereich ihres becherförmigen Grundkörpers, in welchen die Injektionsdorne bei eingesetzter Kapsel hineinragen können, wobei die Aussparung gross genug ist, dass die Injektionsdorne die Kapsel nicht beschädigen. Die ringförmige Aussparung ihrerseits ist mit Löchern versehen, durch welche die Flüssigkeit in die Kapsel einströmen kann.

Weiter zeigt die FR 2 905 683 einen vom Grundkörper zur Befüllung der Kapsel lösbaren Deckel, der mit Löchern versehen ist, durch welche im Betrieb die Injektionsdorne der Kapsel zugeführte Flüssigkeit wieder aus dieser austreten kann. Dazu wird vorgeschlagen, den Deckel mit einem Filter auszurüsten, so dass beispielsweise Kaffeepulver bei der Zubereitung in der Kapsel verbleibt.

Es ist nun die Aufgabe der vorliegenden Erfindung, eine verbesserte wiederbefüllbare Kapsel bereit zu stellen, die eine optimale Qualität des zubereiteten Getränks bzw. der zubereiteten flüssigen Nahrung sicher stellt.

Diese Aufgabe wird durch eine Kapsel gemäss Anspruch 1 gelöst.

Dadurch, dass der Deckel ein Steuerelement für die im Betrieb durch die Kapsel hindurch fliessenden Flüssigkeitsstrom aufweist, kann dieser im Hinblick auf das jeweilige Trockenprodukt eingestellt werden, so dass sich dieses optimal in der Flüssigkeit löst, was wiederum erlaubt, bei den verschiedensten Trockenprodukten jeweils eine verbesserte, optimale Qualität des zubereiteten Getränks bzw. flüssigen Nahrungsmittel zu erzielen.

Bevorzugte Ausführungsformen der erfindungsgemässen Kapsel besitzen die Merkmale von abhängigen Ansprüchen.

Die Erfindung wird nachstehend anhand der Figuren näher erläutert:
Es zeigt:
   Fig. 1: im Querschnitt eine erfindungsgemässe Kapsel, eingesetzt in eine Zubereitungsmaschine,
   Fig. 2a bis 2d: eine bevorzugte Ausführungsform des Deckels für die Kapsel mit einem zugeordneten Steuerelement,
   Fig. 3a bis 3d: eine weitere Ausführungsform des Deckels für die Kapsel mit einem zugeordneten Steuerelement, wobei der Deckel einen Bereich mit Durchströmöffnungen aufweist, und
   Fig. 4a und 4b: zwei Ausführungsformen eines Steuerelements, das auf der Innenseite des Deckels auf diesen aufgelegt werden kann.

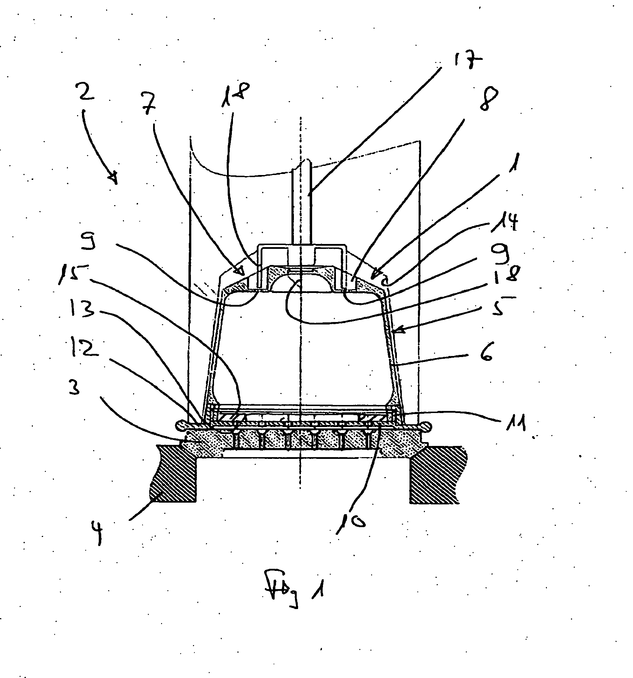

Figur 1 zeigt einen Querschnitt durch eine erfindungsgemässe Kapsel, die in eine Zubereitungsmaschine eingesetzt ist. Da Zubereitungsmaschinen als solche allgemein bekannt sind, zeigt die Figur nur einen Ausschnitt durch eine Halterung 2 für Kapseln wie sie in einer Zubereitungsmaschine üblicherweise vorgesehen ist, mit dem zugehörigen Siebeinsatz 3, der auf einem Verschliessring 4 angeordnet ist.

Die Kapsel 1 besitzt einen becherförmigen Grundkörper 5 mit einer umlaufenden Wand 6 und einem Bodenbereich 7, der mit einer ringförmigen Aussparung 8 ausgestattet ist. In der Aussparung 8 sind Zufuhröffnungen 9 für Flüssigkeit aus der Zubereitungsmaschine vorgesehen.

Am offenen Ende der umlaufenden Wand 6 ist ein Deckel 10 angeordnet, der hier über ein Gewinde 11 lösbar mit der Wand 6 und damit mit dem Grundkörper 5 verbunden ist, so dass die Kapsel 1 mit einem Trockenprodukt befüllt werden kann. Natürlich kann der Deckel 10 auch beispielsweise über ein Scharnier, kombiniert mit einem geeigneten Verschluss, oder durch eine andere Mechanik wie z.B. einem Bajonettverschluss oder über einen Pressitz, der ein einfaches Zusammenstecken erlaubt am Grundkörper 5 angebracht werden.

Der Deckel 10 ist mit einem radial abstehenden Flansch 12 versehen und besitzt eine Anzahl von Ausströmöffnungen 13.

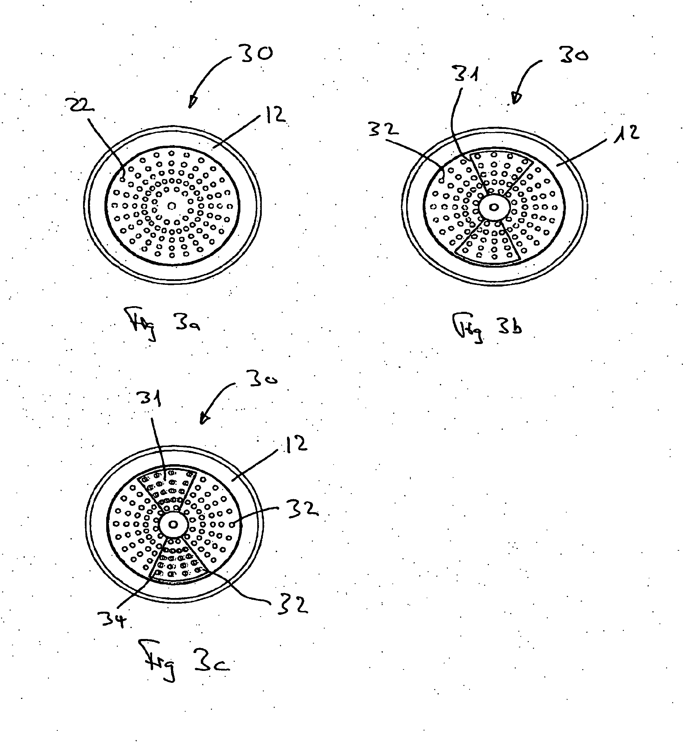

Auf dem Deckel 10 liegt ein Steuerelement 15 auf, das in der in Figur 1 gezeigten Ausführungsform (Figur 3a) eine vorbestimmte Auswahl von Ausströmöffnungen 13 verschliesst. Bevorzugt befindet sich das Steuerelement 15 auf der Innenseite des Deckels 10, wie in der Figur gezeigt. Es ist aber auch erfindungsgemäss, dieses and der Aussenseite des Deckels 10 vorzusehen.

Aus der Figur 1 ist ersichtlich, dass die Kapsel 1 über den Flansch 12 des Deckels 10 zwischen dem Siebeinsatz 4 und der Halterung 2 in betriebsfähiger Position festgeklemmt ist, wie dies bei den bekannten Zubereitungsmaschinen in der Regel der Fall ist. Eingesetzt und entnommen wird die Kapsel 1, indem über eine dem Fachmann bekannte Mechanik der Zubereitungsmaschine der Siebeinsatz 4 von der Halterung 2 (oder umgekehrt) wegbewegt wird und damit genügend Raum für die Manipulation der Kapsel 1 zur Verfügung steht.

Die Halterung 2 ist mit einer Zufuhrleitung 17 für Flüssigkeit ausgerüstet, die über eine Verzweigung in Injektionsdornen 18 endet. Diese ragen in die ringförmige Aussparung 8 des Bodenbereichs 7 hinein (und würden bei einer Einwegkapsel, die ohne Aussparung ausgebildet ist, deren Boden durchstossen).

Im Betrieb wird durch die Zubereitungsmaschine über die Zufuhrleitung 17 und die Injektionsdorne 18 Flüssigkeit via die Zufuhröffnungen 9 der Kapsel 1 in diese eingebracht, wobei die Flüssigkeit dann das in der.Kapsel befindliche Trockenprodukt (das zur Entlastung der Figur hier nicht dargestellt ist) löst und als Zubereitung über die Ausströmöffnungen 13 des Deckels 10 die Kapsel 1 wieder verlässt. Vorliegend ist, wie vorweg erwähnt, eine Auswahl von Ausströmöffnungen 13 durch das Steuerelement 15 verschlossen, mit der Folge, dass die Durchströmgeschwindigkeit der Flüssigkeit durch das Trockenprodukt hindurch reduziert wird.

Dadurch ergibt sich je nach der Art des Trockenprodukts eine verbesserte Zubereitung, als es bei den Kapseln des Stands der Technik der Fall ist, da bei diesen durch die stets offen stehenden Ausströmöffnungen eine höhere Durchströmgeschwindigkeit entsteht.

Erfindungsgemäss ist es so, dass durch das Steuerelement der im Betrieb durch die Kapsel fliessende Flüssigkeitsstrom verändert wird, indem durch dieses eine vorbestimmte Auswahl von Ausströmöffnungen verengt oder verschlossen werden können (was aber auch mit umfasst, dass sämtliche Ausströmöffnungen offen bleiben). Damit ist der Flüssigkeitsstrom auf das jeweilige Trockenprodukt derart abstimmbar, dass dieses durch die Flüssigkeit optimal gelöst wird und damit die Zubereitung mit optimaler Qualität stattfindet.

Bevorzugt besteht der Grundkörper 5 aus Metall, was erlaubt, dessen Wand 6 unabhängig von der Innenwand 14 der Halterung 2 auszubilden und die Kapsel 1 dennoch dem Betriebsdruck der Flüssigkeit, welcher insbesondere bei Espressomaschinen bis gegen zwanzig Bar erreichen kann, auszusetzen. In der Figur ist ersichtlich, dass der Grundkörper 5 etwas kleiner ausgeführt ist, als es die Halterung 2 bzw. der Verlauf deren Innenwand 14 erlauben würde. Dadurch eröffnet sich die Möglichkeit, die erfindungsgemässe Kapsel 1 in verschiedenen Zubereitungsmaschinen verwenden zu können.

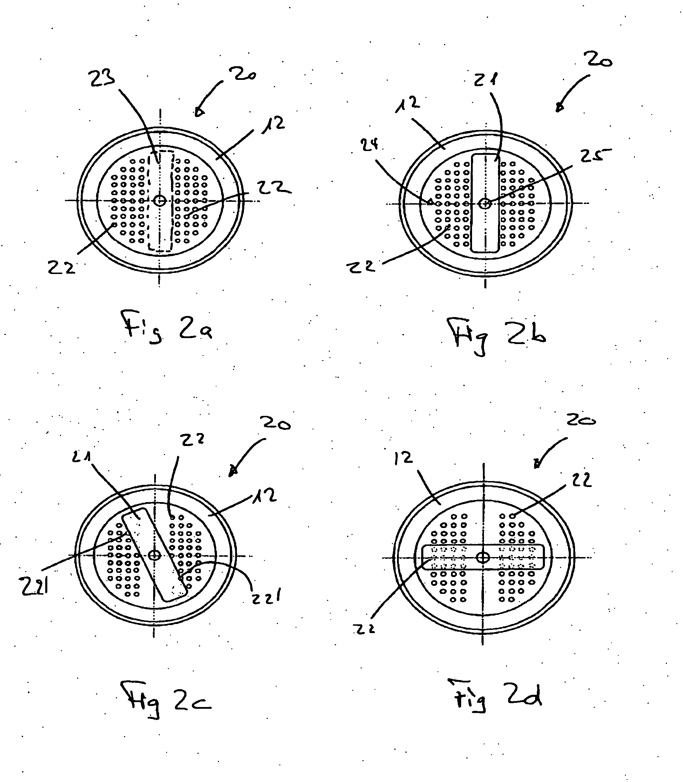

Die Figuren 2a bis 2d zeigen eine bevorzugte Ausführungsform der vorliegenden Erfindung, mit einer Kombination eines Deckels 20 und einem zugehörigen Steuerelement 21. Zur Entlastung der Figuren 2a bis 2d ist ein zum Deckel gehörender, axial abstehender Ring mit einem Gewinde weggelassen, welches einem Gewinde 11 (Figur 1) entspricht und erlaubt, den Deckel 20 an einem Grundkörper 5 (Figur 1) festzulegen.

Figur 2a zeigt den Deckel 20, dessen Ausströmöffnungen 22 auf diesem derart verteilt angeordnet sind, dass sie ein Muster mit einem von Ausströmöffnungen freien Abschnitt bilden, der sich hier als gestrichelt angedeuteter und rechteckig ausgebildeter Bereich 23 über einen Durchmesser des Deckels 20 erstreckt. Da der rechteckige Bereich 23 eine geringe Breite aufweist, hier bei einer totalen Anzahl von sechsundsiebzig Ausströmöffnungen 22 etwa entsprechend drei neben einander liegender Ausströmöffnungen 22, ist der Durchfluss auch des unmittelbar über dem Deckel liegenden Trockenprodukts nur unwesentlich gestört, so dass die Zubereitung durch den Bereich 23 nicht beeinträchtigt wird.

Figur 2b zeigt nun das erfindungsgemäss auf einer Oberfläche des Deckels (hier der dem Inneren der Kapsel 1 zugewendeten inneren Oberfläche 24) aufliegende Steuerelement 21 in Ruhelage. Das Steuerelement 21 ist hier als rechteckige Platte ausgebildet, besitzt also rechteckförmigen Umriss, dessen Abmessungen denjenigen des Bereichs 23 entsprechen. Mit anderen Worten ist es so, dass das Steuerelement in Ruhelage (es befindet sich im Bereich 23) keine der Ausströmöffnungen 22 überdeckt, somit den Fluss durch die Ausströmöffnungen 22 nach aussen nicht behindert. Diese Konfiguration ist für fein gemahlenen Kaffee oder allgemein für Trockenprodukte feiner Körnung geeignet.

Das Steuerelement 21 ist über beispielsweise ein Niet 25 am Deckel 20 relativ zu diesem verschiebbar angeordnet, hier zum Zentrum des Deckels 20 verschwenkbar, derart, dass es, wie in den Figuren 2b bis 2d gezeigt, in eine Betriebslage gebracht werden kann, bei welcher der Durchfluss an Flüssigkeit aus einer Auswahl von Ausströmöffnungen 22 eingeschränkt oder verhindert ist.

Anstelle eines Niets 25 kann auch ein Bolzen vorgesehen werden, der durch den Deckel 10 und das Steuerelement 21 hindurchragt, an seinen Enden je mit einer Nut für eine Feder versehen ist, wobei nach der Montage der Federn das Steuerelement 21 am Deckel 10 festgelegt ist.

Figur 2c zeigt das Steuerelement 21 in einer ersten Betriebslage, d.h. in einer gegenüber seiner Ruhelage verschwenkten Lage. Dadurch sind einige der Ausströmöffnungen 22 durch das Steuerelement 21 überdeckt und damit im Wesentlichen verschlossen, womit der Durchfluss der Flüssigkeit durch diese Ausströmöffnungen 22 im Wesentlichen verhindert ist (eine vollständige Abdichtung der betroffenen Ausströmöffnungen ist für den erfindungsgemässen Zweck nicht erforderlich).
Weitere Ausströmöffnungen 22' sind durch die Kante des Steuerelements 21 nicht vollständig überdeckt, sondern angeschnitten, was den Durchfluss durch die Ausströmöffnungen einschränkt.

In der ersten Betriebslage sind ca. fünfzehn der sechsundsiebzig Ausströmöffnungen verschlossen, was ca. 20% der Durchflusskapazität entspricht.

Diese Konfiguration ist für weniger fein gemahlenen Kaffee oder allgemein für Trockenprodukte mittlerer Körnung geeignet.

Figur 2d zeigt das Steuerelement 21 in einer zweiten Betriebslage, nämlich um 90° gegenüber seiner Ruhelage verschwenkt. Dadurch sind vierundzwanzig der sechsundsiebzig Ausströmöffnungen verschlossen, d.h. die Durchflusskapazität des Deckels 10 ist um ca. 33% vermindert.

Diese Konfiguration ist für grob gemahlenen Kaffee oder allgemein für Trockenprodukte mit grober Körnung geeignet.

Bevorzugt besteht der Deckel 10 aus Metall, was erlaubt, den Durchmesser der Ausströmöffnungen 22 auf einem Durchmesser von 1 mm oder weniger zu halten, ohne dass über einen längeren Gebrauch ein Verschleiss der Ausströmöffnungen 22 eintritt, was zu unregelmässigem Durchfluss und verminderter Qualität der Zubereitung führen kann.

Besonders bevorzugt weisen die Ausströmöffnungen 22 einen Durchmesser von 0,5 mm auf, was zu einer guten Qualität von insbesondere Kaffee führt.

Bei einer noch weiteren Ausführungsform ist das Steuerelement in wenigstens einer seiner Positionen, d.h. in Ruhelage und/oder in einer oder mehreren Betriebslagen am Deckel betriebsfähig festlegbar. Dadurch behält das Steuerelement die einmal eingestellte Lage betriebsfähig bei und verändert diese beim beispielsweise beim Befestigen des Deckels am Grundkörper nicht mehr. Z.B. kann ein Ende des Steuerelements mit einer leichten Erhebung versehen werden, die dann in eine gegengleiche Vertiefung im Deckel eingreifen bzw. einrasten kann, was das Steuerelement dann leicht fixiert. Der Fachmann kann dann die Vertiefungen im Deckel so anordnen, dass sich das Steuerelement in den gewünschten Positionen arretieren lässt.

Die Figuren 3a bis 3d zeigen eine weitere Ausführungsform der vorliegenden Erfindung, mit einer Kombination eines Deckels 30 und einem zugehörigen Steuerelement 31. Zur Entlastung der Figuren 3a bis 3d ist wiederum ein zum Deckel 3 gehörendes, an einem axial abstehenden Ring vorgesehenes Gewinde weggelassen, welches einem Gewinde 11 (Figur 1) entspricht und erlaubt, den Deckel 30 an einem Grundkörper 5 (Figur 1) betriebsfähig festzulegen.

Figur 3a zeigt den Deckel 30, dessen Ausströmöffnungen 32 in einem regelmässigen Muster über seine gesamte Oberfläche verteilt sind. Bei der in der Figur gezeigten Ausführungsform sind einhundertacht Ausströmöffnungen 32 vorgesehen, jeweils mit einem Durchmesser von 0.5 mm. Die Ausströmöffnungen 32 liegen auf Radien des Deckels 30.

Figur 3b zeigt eine weitere Ausführungsform eines Steuerelements 31, das wiederum als Abdeckplatte ausgebildet und dessen Umriss durch den äusseren Rand des Deckels 10 und zwei seiner Durchmesser gebildet ist. In der in der Figur gezeigten Ausführungsform überdeckt das Steuerelement 31 sechsunddreissig Ausströmöffnungen 32. Wiederum liegt das Steuerelement 31 auf der Innenseite des Deckels 30 auf, zudem zentriert es sich im Deckel 30, da sein äusserer Umfang demjenigen des Deckels 30 entspricht und dieser durch sein Gewinde 11 (Figur 1) einen nach oben sich erstreckenden Ring aufweist.

Im Steuerelement 31 sind Durchströmöffnungen 34 derart angeordnet, dass deren Muster dem Muster von Ausströmöffnungen 32 im Deckel 30 entspricht. Liegen somit die Durchströmöffnungen 34 und die Ausströmöffnungen 32 übereinander, befindet sich das Steuerelement 31 in Ruhelage, da der Durchfluss der Flüssigkeit durch den Deckel 30 hindurch nicht behindert ist.

Diese Konfiguration ist für fein gemahlenen Kaffee oder allgemein für Trockenprodukte feiner Körnung geeignet.

Figur 3c zeigt das Steuerelement in einer ersten Betriebslage, d.h. in einer gegenüber seiner Ruhelage verschwenkten Lage. Dadurch überdecken sich die Durchströmöffnungen 34 und die Ausströmöffnungen 32 nur noch zur Hälfte. Es ist mit anderen Worten so, dass damit sechsunddreissig Ausströmöffnungen 32 teilweise verschlossen sind, was achtzehn oder etwa 17% voll verschlossenen Ausströmöffnungen 32 entspricht.

Diese Konfiguration ist für weniger fein gemahlenen Kaffee oder allgemein für Trockenprodukte mittlerer Körnung geeignet.

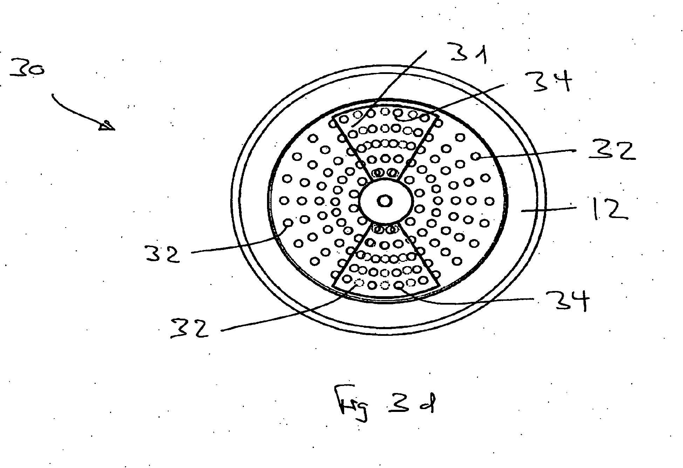

Figur 3d zeigt das Steuerelement 31 in einer zweiten Betriebslage, nämlich derart gegenüber seiner Ruhelage verschwenkt, dass sich seine Durchströmöffnungen 34 neben den Ausströmöffnungen 32 befinden. Dadurch sind sechsunddreissig der einhundertacht Ausströmöffnungen 32 verschlossen, d.h. die Durchflusskapazität des Deckels 30 ist um ca. 34% vermindert (dabei sei angemerkt, dass sich die innersten Öffnungen 32,34 die sich auf einem kleinen Umfang des Deckels 30 befinden, auf Grund der gedrängten Lage noch etwas überlappen können).

Diese Konfiguration ist für grob gemahlenen Kaffee oder allgemein für Trockenprodukte mit grober Körnung geeignet.

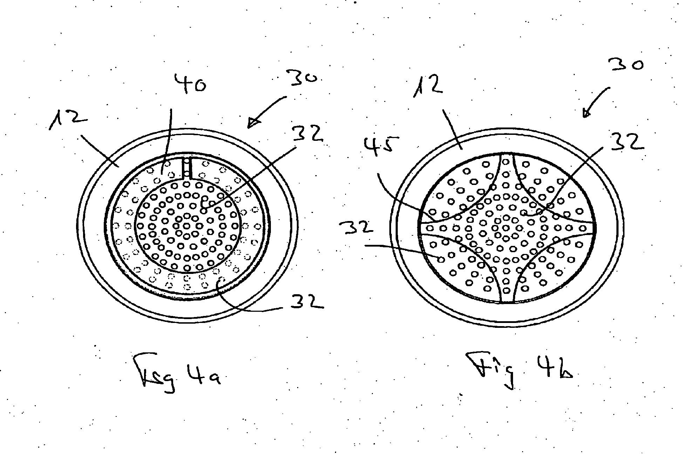

Figur 4a zeigt eine weitere Ausführurigsform eines Steuerelements 40, das als ringförmige Platte ausgebildet ist und auf der Innenseite des Deckels 30 auf diesen aufgelegt werden kann. Einmal eingelegt, zentriert sich das Steuerelement 40 selbst, da es mit seiner Aussenseite 41 auf den wiederum zur Entlastung der Figur nicht dargestellten, axial abstehenden Ring mit dem Gewinde (Gewinde 11, Figur 1) anstossen kann. In der in der Figur gezeigten Ausführungsform sind 46 von 108 Ausströmöffnungen 32 überdeckt und damit im Wesentlichen verschlossen, was einem um 42% verminderten Durchfluss durch den Deckel 30 entspricht. Diese Ausführungsform ist für ein grobkörniges Trockenprodukt geeignet.

Figur 4b zeigt noch eine weitere Ausführungsform eines Steuerelements 45, das als sternförmige Platte ausgebildet und ebenfalls selbstzentrierend ist. Hier wird etwa die Hälfte der Ausströmöffnungen 32 im Wesentlichen verschlossen, so dass auch ein sehr grobkörniges Trockenprodukt noch mit guter Qualität zubereitet werden kann.

Es versteht sich, dass Steuerelemente, die in den Deckel 30 einlegbar ausgebildet sind, mit verschiedenstem Umriss ausgebildet werden können, um eine vorbestimmte Auswahl von Ausströmöffnungen je nach der Lage des Steuerelements auf dem Deckel im Querschnitt zu verengen oder zu verschliessen.

Insbesondere ist es bei einer in den Figuren nicht dargestellten Ausführungsform so, dass ein in eine Kapsel 1 (Figur 1) einlegbares Steuerelement bevorzugt plattenförmig ausgebildet ist und Abmessungen aufweist, die diejenigen des becherförmigen Grundkörpers an seinem offenen Ende oder denjenigen des Deckels im durchströmbaren Bereich nicht überschreiten. Dann kann es beispielsweise nach der Befüllung des becherförmigen Grundkörpers 5 (Figur 1) auf die Füllung aufgelegt werden und anschliessend der Deckel 10 (Figur 1) an diesem festgelegt bzw. verschraubt werden.

Darüber hinaus besitzt ein Steuerelement gemäss dieser nicht dargestellten Ausführungsform einen Umriss, der denjenigen des Grundkörpers am offenen Ende bzw. des Deckels im durchströmbaren Bereich erreicht, derart, dass das Steuerelement betriebsfähig zentriert in die Kapsel oder in den Deckel einlegbar ist. Hier sind die verschiedensten Gestaltungen möglich, beispielsweise gemäss Figur 4a, wo das dort gezeigte Steuerelement 40 rundum am offenen Ende des becherförmigen Grundkörpers 5 (Figur 1) anliegen kann. In einer anderen Gestaltung sind die Abmessungen des Steuerelements derart gewählt, dass diese denjenigen des Grundkörpers 5 (Figur 1) an seinem offenen Ende bzw. denjenigen des Deckels mehrfach entsprechen, wie dies beim Steuerelement 45 von Figur 4b der Fall ist.

An dieser Stelle sei angemerkt, dass für die Zentrierung eines Steuerelements genau auf den Deckel oder den Grundkörper der Kapsel abgestimmte Masse nicht notwendig sind: würde beispielsweise das Steuerelement 21 (Figur 2b) auf einen Deckel 30 (Figur 3a) einfach aufgelegt, könnte sich das Steuerelement 21 etwas seitlich verschieben, was aber immer noch zu einem brauchbaren Resultat führt.

Umgekehrt kann das Steuerelement auch aus einem biegbaren Kunststoff bestehen und dann derart bemessen werden, dass es am Rand des Deckels (bzw. am Ring mit dem Gewinde 11, Figur 1) anstösst und so in seine betriebsfägige Lage einschnappen kann.

Solche Steuerelemente können als Satz mit verschieden grossem Flächenanteil zusammengestellt werden, so dass dann für die Zubereitung verschieden grobkörnige Trockenprodukte über eine Kapsel 1 (Figur 1) jeweils ein geeignetes Steuerelement zur Verfügung steht.

Alternativ kann dann das Steuerelement auf den Deckel gelegt und beispielsweise über einen umlaufenden Wulst im axial abstehenden Ring mit dem Gewinde (Gewinde 11, Figur 1) festgeklemmt werden.

Solch ein Steuerelement kann aus einem anderen Material als Metall, beispielsweise aus Kunststoff bestehen.

## Patentansprüche

1. Wiederbefüllbäre Kapsel (1) für eine Zubereitungsmaschine mit einem becherförmigen Grundkörper (5), der mit einem zu durchfliessenden Produkt gefüllt werden kann und bodenseitig mit Zufuhröffnungen (17) für die Zufuhr von Flüssigkeit aus der Getränkezubereitungsmaschine versehen ist, mit einem Deckel (10,20,30), der vom Grundkörper (5) für die Befüllung mit dem Trockenprodukt lösbar ausgebildet ist und ein Muster von Ausströmöffnungen (13,22,32) aufweist, durch welche die zugeführte Flüssigkeit nach dem Durchfluss durch das Produkt aus der Kapsel (1) wieder austreten kann, **dadurch gekennzeichnet, dass** am Deckel (10,20,30) ein Steuerelement (15,21,31,40,45) für den im Betrieb durch die Kapsel (1) hindurch fliessenden Flüssigkeitsstrom vorgesehen ist, durch welches eine vorbestimmte Auswahl von Ausströmöffnungen (13,22,32) im Querschnitt verengt oder verschlossen werden kann.

2. Kapsel (1) nach Anspruch 1, wobei das Steuerelement (15,21,31,40,45) flächig auf einer Oberfläche des Deckels (10,20,30) aufliegt und diese teilweise überdeckt, und wobei das Steuerelement (15,21,31,40,45) gegenüber dem Deckel (10,20,30) relativ verschiebbar angeordnet ist, derart, dass es in einer Ruhelage den Fluss aus den Ausströmöffnungen (13,22,32) nicht behindert und in einer Betriebslage den Fluss aus einer Auswahl von Ausströmöffnungen (13,22,32) einschränkt oder im Wesentlichen verhindert.

3. Kapsel (1) nach Anspruch 2, wobei das Steuerelement (31,40,45) ein dem Muster von Ausströmöffnungen (13,22,32) des Deckels (10,20,30) entsprechendes Öffnungsmuster aufweist und in Ruhelage die von ihm überdeckten Ausströmöffnungen (13,22,32) freigibt und in Betriebslage diese teilweise und/oder vollständig verschliesst.

4. Kapsel (1) nach Anspruch 2, wobei der Deckel (20) einen Bereich ohne Ausströmöffnungen (22) aufweist und das Steuerelement (21) ohne Öffnungen und derart ausgebildet ist, dass es in seiner Ruhelage nur diesen Bereich überdeckt und für seine Betriebslage wenigstens teilweise aus diesem Bereich heraus geschoben werden kann, derart, dass es dann Ausströmöffnungen (22) teilweise und/oder vollständig verschliesst.

5. Kapsel (1) nach Anspruch 2, wobei das Steuerelement (15,21,31,40,45) gegenüber dem Deckel (10,20,30) verdrehbar ausgebildet ist, und wobei das Verdrehzentrum des Steuerelements (15,21,31,40,45) vorzugsweise im Zentrum des Deckels (10,20,30) liegt.

6. Kapsel (1) nach Anspruch 1, wobei das Steuerelement (15,21,31,40,45) als Abdeckplatte ausgebildet ist, die auf der Innenseite des Deckels (10,20,30) auf diesen aufgelegt werden kann und einen Umriss derart aufweist, dass sie sich im Deckel (10,20,30) zentriert.

7. Kapsel (1) nach Anspruch 6, wobei das Steuerelement (21,40) als Ring ausgebildet ist oder im Wesentlichen rechteckförmigen Umriss aufweist.

8. Kapsel (1) nach Anspruch 1, wobei der Deckel (10,20,30) aus Metall besteht und die Ausströmöffnungen (13,22,32) einen Durchmesser von 1 mm oder weniger aufweisen.

9. Kapsel (1) nach Anspruch 8, wobei der Durchmesser der Ausströmöffnungen (13,22,32) 0,5 mm beträgt.

10. Kapsel (1) nach Anspruch 1, wobei der Grundkörper (5) aus Metall besteht und die Verbindung zum Deckel (10,20,30) über ein am oberen Rand des Grundkörpers umlaufendes Gewinde (11) erfolgt.

11. Kapsel (1) nach Anspruch 1, wobei das Steuerelement (15,21,31,40,45) in Ruhelage und/oder in einer oder mehreren Betriebslagen am Deckel (10,20,30) betriebsfähig festlegbar ist.

12. Steuerelement (15,21,31,40,45) für eine Kapsel (1) nach Anspruch 1, das plattenförmig ausgebildet ist und einen Umriss mit Abmessungen aufweist, die diejenigen des becherförmigen Grundkörpers oder des mit Ausströmöffnungen (13,22,32) versehenen Deckel (10,20,30)s wenigstens teilweise entsprechen, diese aber nicht überschreiten, derart, dass das Steuerelement (15,21,31,40,45) betriebsfähig zentriert in die Kapsel (1) einlegbar ist.

13. Satz von Steuerelementen (15,21,31,40,45) nach Anspruch 12, mit einer Anzahl von Steuerelementen (15,21,31,40,45), deren Fläche jeweils von der Fläche der anderen Steuerelementen (15,21,31,40,45) verschieden ist.

## Claims

1. A refillable capsule (1) for a preparation machine, comprising a cup-shaped base body (5) which can be filled with a product through which a liquid can flow and is provided at the base end with supply openings (17) for the supply of liquid from the beverage preparation machine, further comprising a cover (10, 20, 30) which is formed to be detachable from the base body (5) for filling with the dry product and comprises a pattern of outflow openings (13, 22, 32) through which the supplied liquid can exit from the capsule (1) again after having flowed through the product, **characterized in that** a control element (15, 21, 31, 40, 45) for the liquid flow flowing through the capsule (1) in operation is provided on the cover (10, 20, 30), by means of which a predetermined selection of outflow openings (13, 22, 32) can be constricted or sealed in the cross-section.

2. A capsule (1) according to claim 1, wherein the control element (15, 21, 31, 40, 45) rests in a flat manner on the surface of the cover (10, 20, 30) and partly covers the same, and wherein the control element (15, 21, 31, 40, 45) is arranged to be displaceable relative to the cover (10, 20, 30), such that it does not obstruct the flow out of the outflow openings (13, 22, 32) in an idle position and limits or substantially obstructs the flow from a selection of outflow openings (13, 22, 32) in the operating position.

3. A capsule (1) according to claim 2, wherein the control element (31, 40, 45) has an opening pattern corresponding to the pattern of outflow openings (13, 22, 32) of the cover (10, 20, 30), and releases the outflow openings (13, 22, 32) covered by said control element in the idle position and partly and/or fully seals them in the operating position.

4. A capsule (1) according to claim 2, wherein the cover (20) comprises a region without outflow openings (22) and the control element (21) is arranged without openings and in such a way that it only covers this region in its idle position and can be pushed at least partly out of said region for its operating position, such that it then partly and/or fully seals outflow openings (22).

5. A capsule (1) according to claim 2, wherein the control element (15, 21, 31, 40, 45) is twistable arranged with respect to the cover (10, 20, 30), and wherein the centre of twisting of the control element (15, 21, 31, 40, 45) preferably lies in the centre of the cover (10, 20, 30).

6. A capsule (1) according to claim 1, wherein the control element (15, 21, 31, 40, 45) is arranged as a cover plate which can be placed on the cover (10, 20, 30) on the inside thereof and has such a contour that it centres in the cover (10, 20, 30).

7. A capsule (1) according to claim 6, wherein the control element (21, 40) is arranged as a ring or substantially has a rectangular contour.

8. A capsule (1) according to claim 1, wherein the cover (10, 20, 30) consists of metal and the outflow openings (13, 22, 32) have a diameter of 1 mm or less.

9. A capsule (1) according to claim 8, wherein the diameter of the outflow openings (13, 22, 32) has a diameter of 0.5 mm.

10. A capsule (1) according to claim 1, wherein the base body (5) consists of metal and the connection to the cover (10, 20, 30) occurs by way of a thread (11) provided peripherally on the upper edge of the base body.

11. A capsule (1) according to claim 1, wherein the control element (15, 21, 31, 40, 45) can be operationally fixed to the cover (10, 20, 30) in the idle position and/or in one or several operating positions.

12. A control element (15, 21, 31, 40, 45) for a capsule (1) according to claim 1, which is formed in a plate-shaped manner and has a contour with dimensions which correspond at least partly to those of the cup-shaped base body or the cover (10, 20, 30) provided with the outflow openings (13, 22, 32), but do not exceed them, such that the control element (15, 21, 31, 40, 45) can be operatively inserted in a centred manner into the capsule (1).

13. A set of control elements (15, 21, 31, 40, 45) according to claim 12, comprising a number of control elements (15, 21, 31, 40, 45) whose area respectively differs from the area of the other control elements (15, 21, 31, 40, 45).

## Revendications

1. Capsule (1) rechargeable pour une machine de préparation avec un corps (5) en forme de godet qui est rempli d'un produit qui doit être parcouru par un écoulement et avec dans le fond des ouvertures d'entrée (17) pour l'entrée de liquide provenant de la machine de préparation de boissons, avec un couvercle (10, 20, 30) conçu pour pouvoir être détaché du corps (5) en vue du remplissage avec le produit sec et présentant une disposition d'ouvertures d'écoulement (13, 22, 32) par lesquelles le liquide amené peut ressortir de la capsule (1) après s'être écoulé à travers le produit, **caractérisée en ce qu'**il est prévu sur le couvercle (10, 20, 30) un élément de contrôle (15, 21, 31, 40, 45) pour le flux de liquide s'écoulant à travers la capsule (1) pendant le fonctionnement, qui permet de resserrer la section d'une sélection prédéterminée d'ouvertures d'écoulement (13, 22, 32) ou de les fermer.

2. Capsule (1) selon la revendication 1, dans laquelle l'élément de contrôle (15, 21, 31, 40, 45) repose à plat sur une surface du couvercle (10, 20, 30) et recouvre partiellement celle-ci, et dans laquelle l'élément de contrôle (15, 21, 31, 40, 45) est disposé de façon à pouvoir se déplacer par rapport au couvercle (10, 20, 30) de telle manière qu'il ne fasse pas obstacle à l'écoulement sortant des ouvertures d'écoulement (13, 22, 32) dans une position de repos et restreigne ou empêche pour l'essentiel l'écoulement sortant d'une sélection d'ouvertures d'écoulement (13, 22, 32) dans une position de fonctionnement.

3. Capsule (1) selon la revendication 2, dans laquelle l'élément de contrôle (31, 40, 45) présente une disposition d'ouvertures correspondant à la disposition des ouvertures d'écoulement (13, 22, 32) du couvercle (10, 20, 30) et dégage les ouvertures d'écoulement (13, 22, 32) qu'il recouvre dans la position de repos et ferme partiellement et/ou complètement celles-ci dans la position de fonctionnement.

4. Capsule (1) selon la revendication 2, dans laquelle le couvercle (20) présente une zone sans ouvertures d'écoulement (22) et l'élément de contrôle (21) est sans ouvertures et conformé de telle manière qu'il ne recouvre que cette zone dans sa position de repos et puisse être au moins partiellement repoussé hors de cette zone pour sa position de fonctionnement, de telle manière qu'il ferme alors partiellement et/ou complètement des ouvertures d'écoulement (22).

5. Capsule (1) selon la revendication 2, dans laquelle l'élément de contrôle (15, 21, 31, 40, 45) est conformé de façon à pouvoir tourner par rapport au couvercle (10, 20, 30) et dans laquelle le centre de rotation de l'élément de contrôle (15, 21, 31, 40, 45) se trouve de préférence au centre du couvercle (10, 20, 30).

6. Capsule (1) selon la revendication 1, dans laquelle l'élément de contrôle (15, 21, 31, 40, 45) est conformé comme une plaque de couverture qui peut être posée sur le couvercle (10, 20, 30) sur la face intérieure de celui-ci et présente un contour tel qu'elle se centre dans le couvercle (10, 20, 30).

7. Capsule (1) selon la revendication 6, dans laquelle l'élément de contrôle (21, 40) est conformé comme un anneau ou présente un contour sensiblement rectangulaire.

8. Capsule (1) selon la revendication 1, dans laquelle le couvercle (10, 20, 30) est composé de métal et les ouvertures d'écoulement (13, 22, 32) présentent un diamètre de 1 mm ou moins.

9. Capsule (1) selon la revendication 8, dans laquelle le diamètre des ouvertures d'écoulement (13, 22, 32) est de 0,5 mm.

10. Capsule (1) selon la revendication 1, dans laquelle le corps (5) est fait de métal et la liaison au couvercle (10, 20, 30) est réalisée par un filetage (11) qui fait le tour sur le bord supérieur du corps.

11. Capsule (1) selon la revendication 1, dans laquelle l'élément de contrôle (15, 21, 31, 40, 45) peut être fixé de façon opérationnelle sur le couvercle (10, 20, 30) dans la position de repos et/ou dans une ou plusieurs positions de fonctionnement.

12. Élément de contrôle (15, 21, 31, 40, 45) pour une capsule (1) selon la revendication 1, qui est conformé en forme de plaque et présente un contour dont les dimensions correspondent partiellement à celles du corps en forme de godet ou du couvercle (10, 20, 30) muni d'ouvertures d'écoulement (13, 22, 32) mais ne dépassent pas celles-ci, de sorte que l'élément de contrôle (15, 21, 31, 40, 45) peut être inséré et centré dans la capsule (1) de façon opérationnelle.

13. Ensemble d'éléments de contrôle (15, 21, 31, 40, 45) selon la revendication 12, avec un certain nombre d'éléments de contrôle (15, 21, 31, 40, 45) dont chacun a une aire différente de l'aire des autres éléments de contrôle (15, 21, 31, 40, 45).
